Europäisches Patentamt

European Patent Office

Office européen des brevets

(19)

(11) **EP 1 521 146 A2**

(12) # EUROPEAN PATENT APPLICATION

(43) Date of publication:
06.04.2005 Bulletin 2005/14

(51) Int Cl.7: **G05B 11/01**, G05B 15/02,
B62D 7/15, B60T 8/00

(21) Application number: 04023592.1

(22) Date of filing: 01.10.2004

(84) Designated Contracting States:
**AT BE BG CH CY CZ DE DK EE ES FI FR GB GR
HU IE IT LI LU MC NL PL PT RO SE SI SK TR**
Designated Extension States:
**AL HR LT LV MK**

(30) Priority: **02.10.2003 JP 2003344744**

(71) Applicant: **TOYODA KOKI KABUSHIKI KAISHA
Kariya-shi Aichi-ken (JP)**

(72) Inventors:
• **Ohta, Takayuki Toyoda Koki K.K.
Kariya-shi Aichi-ken (JP)**

• **Momiyama, Minekazu Toyoda Koki K.K.
Kariya-shi Aichi-ken (JP)**
• **Kato, Hiroaki Toyoda Koki K.K.
Kariya-shi Aichi-ken (JP)**
• **Kodama, Akira Toyoda Koki K.K.
Kariya-shi Aichi-ken (JP)**

(74) Representative:
**Leson, Thomas Johannes Alois, Dipl.-Ing.
Patentanwälte
Tiedtke-Bühling-Kinne & Partner,
Bavariaring 4
80336 München (DE)**

(54) **Integrated control apparatus for vehicle**

(57)     In a vehicle of a four-wheel independent steering type, an electronic control unit calculates a target yaw rate in accordance with a vehicle speed and a steering angle, and calculates a vehicle-control target value on the basis of the target yaw rate and an actual yaw rate. The electronic control unit estimates the grip factors of the individual wheels to road surface, and sets a distribution ratio for distribution of the vehicle-control target value among actuators of a steering system, a brake system, and a drive system in accordance with the estimated grip factors. The electronic control unit controls the actuators of the three systems in accordance with control instruction values determined on the basis of the vehicle-control target value and the distribution ratio.

**Figure 1**

EP 1 521 146 A2

**Description**

BACKGROUND OF THE INVENTION

Field of the Invention

The present invention relates to a integrated control apparatus for a vehicle.

Description of the Related Art

A tire grip factor differs from a lateral force utilization factor or a lateral G utilization factor disclosed in Japanese Laid-Open Patent Application No. H11-99956. Specifically, the apparatus disclosed in this publication obtains the maximum lateral force that can be generated on a road surface, from the frictional coefficient $\mu$ of the road surface. This road-surface frictional coefficient $\mu$ is estimated on the basis of the dependency of cornering power Cp (defined to be a value of side force at a slip angle of 1 degree) on the road-surface frictional coefficient $\mu$. However, cornering power Cp is influenced not only by road-surface frictional coefficient $\mu$, but also by the shape of the contact surface of each tire (length and width of the contact surface), elasticity of tread rubber, and other factors. For example, in the case where water is present on the tread, or in the case where the elasticity of the tread rubber has changed because of tire wear or temperature change, the cornering power Cp changes even when the road-surface frictional coefficient $\mu$ is constant. As described above, the technique disclosed in the publication does not take into consideration the characteristics of wheels as tires.

In contrast, the grip factor is determined in consideration of characteristics of tires.

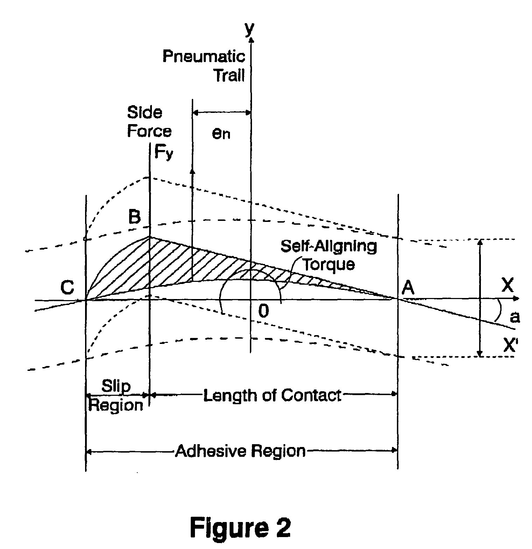

Here, the tire grip factor will be described in detail. In Automotive Technology Handbook (First Volume), Fundamentals and Theory, pp. 179 - 180 (published by Society of Automotive Engineers of Japan, Inc. on December 1, 1990), a state in which a tire is rotating while sideslipping at a lateral slip angle $\alpha$ is described as shown in FIG. 2. That is, in FIG. 2, the tread of a tire illustrated by broken lines comes into contact with a road surface via a contact surface front end including point A of FIG. 2 and adheres to the road surface up to point B, while moving toward the heading direction of the tire. When deformation force caused by a lateral shear deformation becomes equal to frictional force, the tread starts slipping, separates from the road surface at the rear end including point C, and returns to the original state. In this behavior, the force Fy (side force) generated by the entire contact surface is represented by the product of a laterally deformed area (a hatched portion in FIG. 2) of the tread and a lateral elastic constant of the tread per unit area. As shown in FIG. 2, the point of application of side force Fy is shifted rearward (leftward in FIG. 2) from the point O directly below the center line of the tire by $e_n$ (pneumatic trail). Accordingly, moment Fy·en in effect at that time serves as self-aligning torque (Tsa) and acts in a direction for reducing the lateral slip angle $\alpha$.

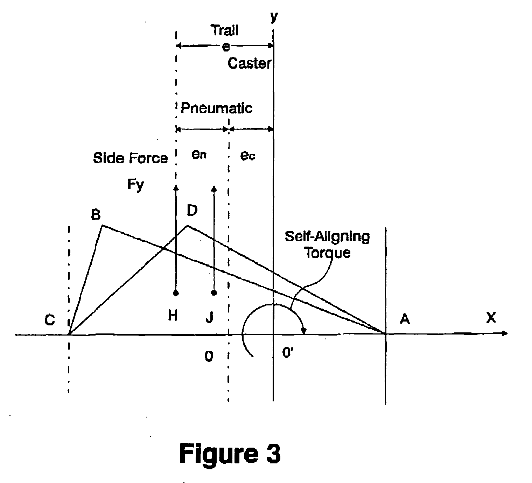

Next, the case where a tire is attached to a vehicle will be described with reference to FIG. 3, which is a simplified representation of the situation depicted in FIG. 2. In general, in order to facilitate return of a steering wheel, a caster angle is imparted to each steerable wheel of a vehicle to thereby provide a caster trail ec. Accordingly, the contact point of the wheel moves to point O', and a moment for returning the steering wheel is represented by Fy·(en + ec).

When the grip of the tire in the lateral direction decreases, and the slip region expands, the lateral deformation of the tread changes from the shape of A-B-C to the shape of A-D-C of FIG. 3. As a result, the point of application of side force Fy moves forward (from point H to point J of FIG. 3) in the vehicle heading direction. In other words, the pneumatic trail en decreases. Accordingly, even in the case where the same side force Fy acts on the tire, the pneumatic trail en and the self-aligning torque Tsa are large when the adhering region is large, and the slip region is small (i.e., the lateral grip of the tire is high). However, when the lateral grip of the tire is lost, and the slip region increase, the pneumatic trail en and the self-aligning torque Tsa decrease.

As described above, the level of lateral grip of a tire can be detected on the basis of change in the pneumatic trail en. Since change in the pneumatic trail en appears in the self-aligning torque Tsa, a grip factor, which represents the level of lateral grip of a front wheel of the vehicle, can be estimated on the basis of the self-aligning torque Tsa.

Incidentally, when the above-described various systems of a vehicle such as a steering system, a brake system, and a drive system are to be controlled in an integrated manner, conventionally, the grip factors of front wheels (wheels located frontward) are estimated so as to determine the conditions of tires (conditions of the front wheels), and control quantities are distributed to individual actuators of the respective systems in accordance with the conditions, whereby behavior stabilization control against disturbance to the vehicle is performed.

However, the above-described integrated control apparatus estimates the grip factors of only front wheels under the assumption that the vehicle is of a front-wheel-steering type. Specifically, since the conventional apparatus obtains the grip factors from the relation between self-aligning torque and slip angle of the front wheels, subtle differences in grip factor between left and right wheels and between front and rear wheels are estimated from, for example, lateral acceleration. Therefore, the conventional apparatus can be said not to estimate exact grip factors of individual wheels.

SUMMARY OF THE INVENTION

In view of the foregoing, an object of the present invention is to provide an integrated control apparatus for a vehicle having independently steerable wheels, which apparatus can estimate exact grip factors of the individual wheels, and which can integrally control actuators of at least two of a steering system, a brake system, and a drive system, by optimally distributing a control quantity in accordance with the grip factor of each wheel, to thereby improve the stability of the vehicle.

In order to achieve the above object, the present invention provides an integrated control apparatus for a vehicle having vehicle behavioral-quantity detection, a vehicle behavioral-quantity detected device; an operation quantity detection device for detecting a quantity of driver's operation to a brake system, a drive system, and a steering system capable of independently steering individual wheels of the vehicle; a target vehicle behavioral-quantity calculation device for calculating a target vehicle behavioral-quantity in accordance with the detected vehicle behavioral-quantity and the detected operation quantity; a vehicle-control target value calculation device for calculating a vehicle-control target value on the basis of the target vehicle behavioral-quantity and the vehicle behavioral-quantity; an estimation device for estimating grip factors of the individual wheels to road surface; a distribution ratio setting device for setting, in accordance with the grip factors of the individual wheels, a distribution ratio for distribution of the vehicle-control target value among respective actuators of at least two systems among the brake system, the drive system, and the steering system; and a control device for controlling the actuators of at least two systems in accordance with the vehicle-control target value distributed among the actuators at the distribution ratio.

Preferably, the target vehicle behavioral-quantity calculation device calculates a target yaw rate, which serves as the target vehicle behavioral-quantity; and the vehicle-control target value calculation device calculates the vehicle-control target value on the basis of the target yaw rate and an actual yaw rate, which serves as the vehicle behavioral-quantity.

Preferably, the drive system includes drive force distribution device for distributing drive force between front wheels and rear wheels; and the control device controls an actuator of the drive force distribution device.

The estimation device may estimate each of the grip factors on the basis of change in pneumatic trail of the corresponding wheel.

Alternatively, the estimation device may estimate each of the grip factors on the basis of a road surface friction allowance level of the corresponding wheel.

Preferably, the estimation device includes steering-force-index detection device for detecting a steering force index including torque applied to the steering system including steering mechanisms for the individual wheels; a self-aligning torque estimation device for estimating a self-aligning torque produced by each wheel on the basis of the detected steering force index; a wheel index estimation device for estimating, on the basis of the vehicle behavioral-quantity detected by the vehicle behavioral-quantity detection device, at least one wheel index among wheel indexes including side force and slip angle of each wheel; and a grip factor estimating device for estimating the grip factor of each wheel on the basis of change in the self-aligning torque estimated by the self-aligning torque estimation device in relation to the wheel index estimated by the wheel index estimation device.

In this case, preferably, a reference self-aligning torque setting device is provided so as to set a reference self-aligning torque on the basis of the wheel index estimated by the wheel index estimation device and the self-aligning torque estimated by the self-aligning torque estimation device, wherein the grip factor estimating device estimates the grip factor of each wheel on the basis of results of comparison between the reference self-aligning torque set by the reference self-aligning torque setting device and the self-aligning torque estimated by the self-aligning torque estimation device.

In the case, preferably, the reference self-aligning torque setting device sets a reference self-aligning torque characteristic which is approximated from the characteristic of the self-aligning torque estimated by the self-aligning torque estimation device in relation to the wheel index estimated by the wheel index estimation device, the reference self-aligning torque characteristic being defined as a straight line in a coordinate system and passing through the origin of the coordinate system, and sets the reference self-aligning torque on the basis of the reference self-aligning torque characteristic.

Since the present invention is applied to a vehicle having wheels, all of which are independently steerable, the tire conditions of all the wheels can be determined accurately. Moreover, under the present invention, the grip factors of the wheels are estimated individually in such a vehicle having independently steerable wheels. Therefore, the respective actuators of at least two systems among the brake system, the drive system, and the steering system can be integrally controlled at an optimal distribution ratio determined on the basis of the grip factors of the wheels, whereby the stability of the vehicle can be improved.

BRIEF DESCRIPTION OF THE DRAWINGS

Various other objects, features and many of the attendant advantages of the present invention will be readily appreciated as the same becomes better understood by reference to the following detailed description of the preferred embodiments when considered in connection with the accompanying drawings, in which:

FIG. 1 is a schematic, configurational block diagram of an integrated control apparatus according to a first embodiment of the present invention;
FIG. 2 is a graph showing the relation between self-aligning torque and side force;
FIG. 3 is a simplified view of the situation depicted in FIG. 2, showing the relation between self-aligning torque and side force;
FIG. 4 is a control block diagram of an electronic control unit of an embodiment;
FIG. 5 is a control block diagram of a grip factor calculation section of the electronic control unit;
FIG. 6 is an explanatory view showing a 2-wheel vehicle model having a front wheel and a rear wheel;
FIG. 7 is a control flowchart which the electronic control unit of an embodiment follows for execution of control;
FIG. 8 is a graph showing a characteristic of side force vs. self-aligning torque;
FIG. 9 is a graph showing a characteristic of self-aligning torque vs. actual reaction torque, for explanation of friction component of a steering mechanism;
FIG. 10 is a block diagram of a grip factor calculation section, which estimates a grip factor from slip angle and self-aligning torque, in another embodiment of the present invention;
FIG. 11 is a graph showing the relation of wheel side force and self-aligning torque with slip angle;
FIG. 12 is a graph showing the relation of self-aligning torque with slip angle;
FIG. 13 is a graph showing the relation of self-aligning torque with slip angle;
FIG. 14 is a graph showing the relation of self-aligning torque with slip angle;
FIG. 15 is a graph showing the relation of self-aligning torque with slip angle;
FIG. 16 is a graph showing the relation of self-aligning torque with slip angle in another embodiment; and
FIG. 17 is a graph showing the relation between grip factor $\varepsilon$ based on pneumatic trail and grip factor $\varepsilon$m based on road-surface-friction allowance level.

DESCRIPTION OF THE PREFERRED EMBODIMENTS

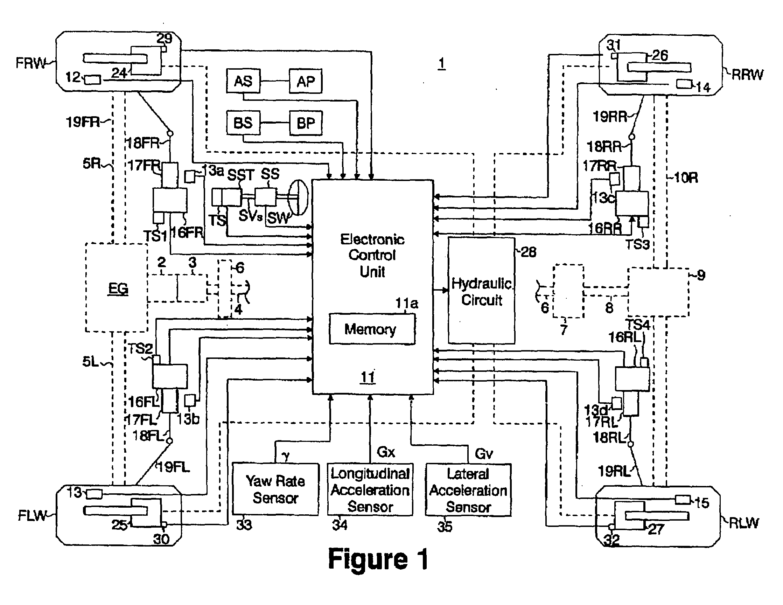

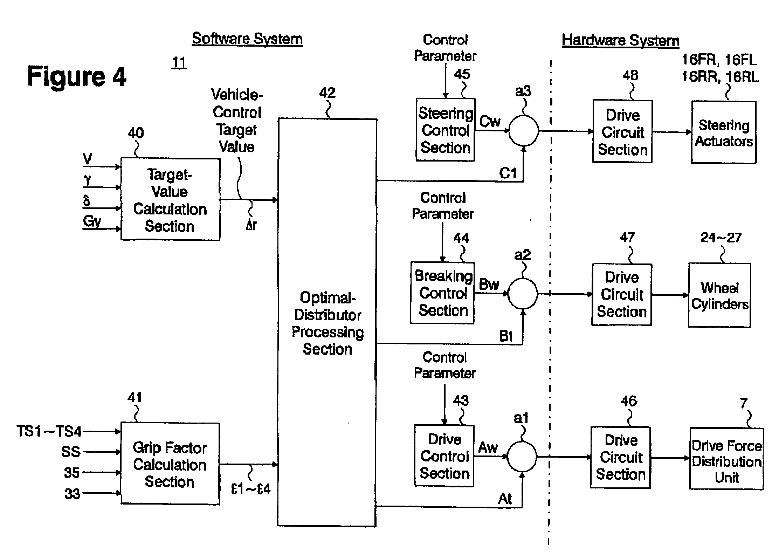

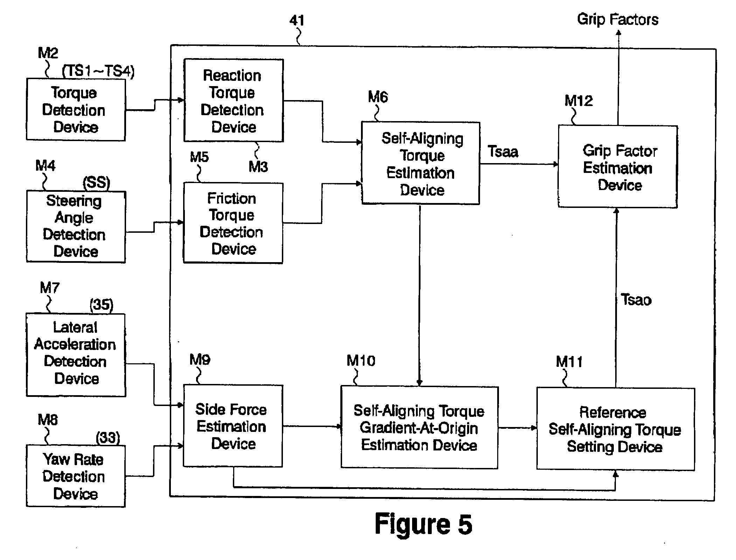

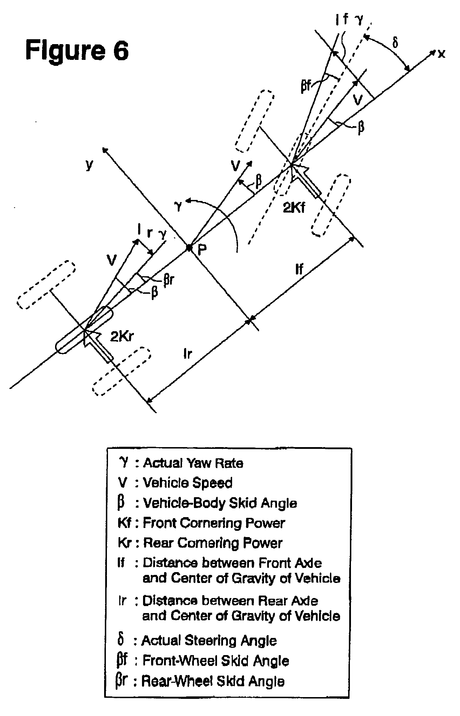

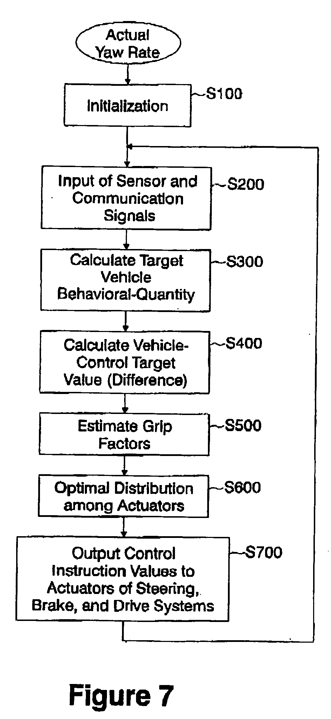

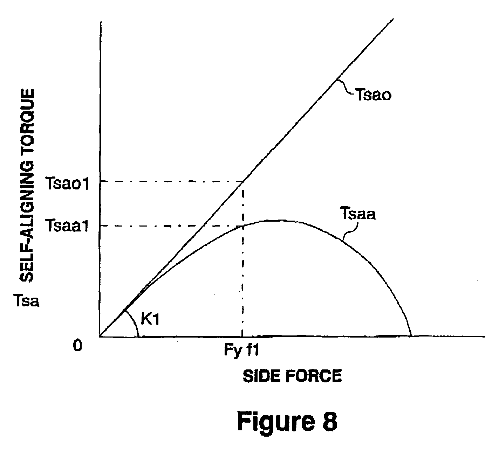

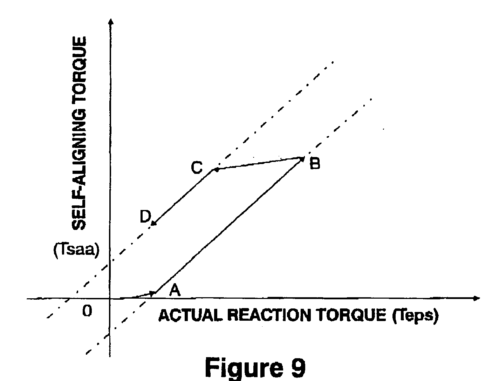

An embodiment of the present invention will next be described with reference to FIGS. 1 to 9. FIG. 1 is a schematic configuration view of an integrated control apparatus for a vehicle according to the present embodiment. FIG. 2 is a graph showing the relation between self-aligning torque and side force in an ordinary vehicle whose tires are rolling while skidding. FIG. 3 is a simplified representation of the situation depicted in FIG. 2 showing the relation between self-aligning torque and side force. FIG. 4 is a block diagram of an electronic control unit 11. FIG. 5 is a block diagram of a grip factor calculation section 41. FIG. 6 is an explanatory view showing a 2-wheel vehicle model having a front wheel and a rear wheel. FIG. 7 is a control flowchart. FIG. 8 is a graph showing side force vs. self-aligning torque characteristics. FIG. 9 is a graph showing self-aligning torque vs. steering-mechanism friction component characteristics in relation to correction at the time of estimation.

Drive System

First, the drive system of a vehicle 1 will be described. As shown in FIG. 1, a center differential 4 is connected to an engine EG of the vehicle 1 via a torque converter 2 and a transmission 3. Front axles 5R and 5L are connected to the center differential 4 via an unillustrated front drive shaft and an unillustrated front differential. A front right wheel FRW is attached to the front axle 5R, and a front left wheel FLW is attached to the front axle 5L. A drive force distribution unit 7, which serves as drive force distribution device, is connected to the center differential 4 via a rear drive shaft 6. While the drive force distribution unit 7 is connected to the rear drive shaft 6, a rear differential 9 is connected to the drive force distribution unit 7 via a drive pinion shaft 8. A rear right wheel RRW and a rear left wheel RLW are connected to the rear differential 9 via a pair of rear axles 10R and 10L, respectively.
The drive force of the engine EG is transmitted to the center differential 4 via the torque converter 2 and the transmission 3 and further to the front right wheel FRW and the front left wheel FLW via the unillustrated front drive shaft, the unillustrated front differential, and the front axles 5R and 5L. When the rear drive shaft 6 and the drive pinion shaft 8 are connected in a torque-transmittable condition by means of the drive force distribution unit 7, the drive force of the engine EG is transmitted to the rear right wheel RRW and the rear left wheel RLW via the rear drive shaft 6, the drive pinion shaft 8, the rear differential 9, and the rear axles 10R and 10L.
The drive force distribution unit 7 includes an unillustrated known electromagnetic clutch mechanism of a wet multiple-disc type. The electromagnetic clutch mechanism has a plurality of clutch discs, which are frictionally engaged with each other or are disengaged from each other. When current corresponding to a control instruction value is supplied to an electromagnetic solenoid (not shown), which serves as an actuator, contained in the electromagnetic clutch mechanism, the clutch discs are frictionally engaged with each other, whereby torque is transmitted to the rear right wheel RRW and the rear left wheel RLW.

The frictional engagement force between the clutch discs varies depending on the quantity of current (intensity of current) supplied to the electromagnetic solenoid. By device of controlling the quantity of current supplied to the electromagnetic solenoid, the transmission torque between the front wheels FRW, FLW and the rear wheels RRW, RLW; i.e., the restraint force therebetween, can be adjusted. As the frictional engagement force between the clutch discs increases, the transmission torque between the front wheels and the rear wheels increases. On the other hand, as the frictional engagement force between the clutch discs decreases, the transmission torque between the front wheels and the rear wheels decreases. The electronic control unit 11 starts and stops supply of current to the electromagnetic solenoid and adjusts the quantity of current supplied to the electromagnetic solenoid. When supply of current to the electromagnetic solenoid is shut off, the clutch discs are disengaged from each other, thereby shutting off transmission of torque to the rear wheels (rear right wheel RRW and rear left wheel RLW). The electronic control unit 11 controls the frictional engagement force between the clutch discs in the drive force distribution unit 7, to thereby select a 4-wheel drive mode or a 2-wheel drive mode. Also, in the 4-wheel drive mode, the electronic control unit 11 controls the drive force distribution ratio (torque distribution ratio) between the front wheels and the rear wheels. In the present embodiment, the drive force distribution rate between the front wheels and the rear wheels can be adjusted in the range of 100:0 to 50:50.

The vehicle 1 has an accelerator pedal AP. An accelerator sensor AS inputs a detection signal corresponding to a stepping-on measurement of the accelerator pedal AP to the electronic control unit 11 mounted on the vehicle 1. In accordance with the detection signal, the electronic control unit 11 controls the throttle opening of the engine EG. As a result, the output of the engine EG is controlled in accordance with the stepping-on measurement of the accelerator pedal AP. Wheel speed sensors 12 to 15 for detecting the rotational speed of the corresponding wheels (wheel speed) are provided respectively on the front right wheel FRW, the front left wheel FLW, the rear right wheel RRW, and the rear left wheel RLW. Detection signals (wheel speeds Vfr, Vfl, Vrr, and Vrl) from the corresponding wheel speed sensors 12 to 15 are output to the electronic control unit 11.

Steering System

Next, a steering system of the vehicle 1 will be described. The steering system includes a steering wheel SW; steering actuators 16FR, 16FL, 16RR, and 16RL provided for the individual wheels; and steering gears 17FR, 17FL, 17RR, and 17RL. The steering wheel SW is not mechanically connected to the steering actuators. When the steering actuators 16FR, 16FL, 16RR, and 16RL are driven, the steering gears 17FR, 17FL, 17RR, and 17RL transmit respective outputs of the steering actuators to the front right wheel FRW, the front left wheel FLW, the rear right wheel RRW, and the rear left wheel RLW, to hereby change their steered angles.

The steering gears 17FR, 17FL, 17RR, and 17RL constitute individual steering mechanisms for the individual wheels in cooperation with the steering actuators 16FR, 16FL, 16RR, and 16RL corresponding thereto.

Each of the steering actuators is formed of an electric motor such as a well known brushless motor. The steering gear 17FR (17FL, 17RR, 17RL) is connected to the output shaft of the corresponding steering actuator, and has a mechanism for converting rotation of the output shaft to linear motion of a corresponding rod 18FR (18FL, 18RR, 18RL). The rods 18FR 18FL, 18RR, and 18RL are connected to the front right wheel FRW, the front left wheel FLW, the rear right wheel RRW, and the rear left wheel RLW, via tie rods 19FR, 19FL, 19RR, and 19RL, and unillustrated knuckle arms. With this mechanism, outputs of the steering actuators are transmitted to the front right wheel FRW, the front left wheel FLW, the rear right wheel RRW, and the rear left wheel RLW, to thereby change their steered angles. The steering gears 17FR, 17FL, 17RR, and 17RL have a well-known structure. No limitation is imposed on their structure, so long as the steering gears 17FR, 17FL, 17RR, and 17RL can change the steered angles of the corresponding wheels in accordance with outputs of the steering actuators. Notably, the wheel alignment is adjusted in such a manner that when the steering actuators are not driven, the individual wheels are returned to a neutral steering position by device of self-aligning torque.

The steering wheel SW is connected to a steering shaft SWa and a steering reaction imparting unit SST. The steering reaction imparting unit SST includes a steering reaction actuator (not shown). The steering reaction actuator is formed of an electric motor, such as a brushless motor, which has an output shaft integrally connected to the steering shaft SWa.

A steering angle sensor SS is provided on the steering shaft SWa, and outputs a detection signal (steering angle signal) which is indicative of steering angle $\theta$ of the steering wheel SW and is fed to the electronic control unit 11. The steering angle sensor SS serves as operation amount detection device for detecting the amount of a driver's operation imparted to the steering system (steering angle θ).

Further, a steering torque sensor TS is attached to the steering shaft SWa, and outputs a detection signal which is indicative of steering torque of the steering wheel SW and is fed to the electronic control unit 11. The direction of steering can be determined on the basis of the sign of the steering toque signal output from the steering torque sensor TS.

Moreover, steered angle sensors 13a to 13d are provided so as to detect respective amounts of movement of the rods 18FR, 18FL, 18RR, and 18RL as steered angles of the wheels, and the steered angle sensors 13a to 13d output detection signals which are indicative of respective steered angles of the individual wheels and are fed to the electronic control unit 11. Each of the steered angle sensors 13a to 13d is a potentiometer. In addition, torque sensors TS1 to TS4 are provided so as to detect respective torques of the steering actuators 16FR, 16FL, 16RR, and 16RL as steering forces for steering the individual wheels, and the torque sensors TS1 to TS4 output detection signals which are indicative of respective torques and are fed to the electronic control unit 11. The torque sensors TS1 to TS4 are current sensors adapted to detect load currents of the steering actuators 16FR, 16FL, 16RR, and 16RL.

Brake System

Next, the brake system of the vehicle 1 will be described. The brake system includes wheel cylinders 24 to 27, which serve as braking device and are provided respectively for the front right wheel FRW, the front left wheel FLW, the rear right wheel RRW, and the rear left wheel RLW, a hydraulic circuit 28, an unillustrated master cylinder; and a brake pedal BP for driving the master cylinder. The hydraulic circuit 28 includes a reservoir, an oil pump, and various valve device. In an ordinary state, the brake fluid pressures of the wheel cylinders 24 to 27 are controlled via the hydraulic circuit 28 by device of the brake fluid pressure of the master cylinder, which is driven in accordance with the stepping-on force of the brake pedal BP. The brake fluid pressure of each of the wheel cylinders 24 to 27 exerts a braking force on the corresponding wheel.

In execution of predetermined control, such as antilock braking control, the electronic control unit 11 controls solenoid valves (unillustrated) of the hydraulic circuit 28 on the basis of various control parameters, which will be described later, to thereby individually control the brake fluid pressures of the wheel cylinders 24 to 27; for example, to increase, decrease, or hold the brake fluid pressures. A brake stepping-on-force sensor BS inputs, to the electronic control unit 11, a signal corresponding to a stepping-on force when the brake pedal BP is stepped on. The electronic control unit 11 detects, from the signal, a stepping-on force of the brake pedal BP.

Fluid pressure sensors 29 to 32 detect the brake fluid pressures of the corresponding wheel cylinders 24 to 27 and input detection signals indicative of the detected brake fluid pressures to the electronic control unit 11. The electronic control unit 11 detects, from the detection signals, the braking conditions of the front right wheel FRW, the front left wheel FLW, the rear right wheel RRW, and the rear left wheel RLW.

Control System

Next, control system of the vehicle 1 will be described. The electronic control unit 11 includes a digital computer. The electronic control unit 11 may assume the form of a single ECU (electronic control unit) or the form of a plurality of ECUs corresponding to controls to be performed. The ECU includes a CPU and a memory 11a, which includes ROM and RAM. The electronic control unit 11 stores in the memory 11a, as control parameters, detection signals mentioned below and associated with behavioral conditions of the vehicle 1. On the basis of the control parameters, the electronic control unit 11 integrally controls the steering system, the drive system, and the brake system of the vehicle 1, to thereby stabilize the running posture of the vehicle 1; i.e., to improve vehicle stability. The electronic control unit 11 serves as control device.

Outline of Engine Control

A detection signal indicative of the stepping-on measurement of the accelerator pedal AP is input to the electronic control unit 11 from the accelerator sensor AS. On the basis of the stepping-on measurement of the accelerator pedal AP, the electronic control unit 11 calculates the throttle opening of the engine EG and outputs a control signal indicative of the throttle opening to the engine EG, to thereby control the engine EG.

Calculation of Vehicle Speed

Detection signals indicative of the wheel speeds Vfr, Vfl, Vrr, and Vrl of the front right wheel FRW, the front left wheel FLW, the rear right wheel RRW, and the rear left wheel RLW, respectively, are input to the electronic control unit 11 from the wheel speed sensors 12 to 15. On the basis of the input detection signals, the electronic control unit 11 calculates the wheel speeds of the front right wheel FRW, the front left wheel FLW, the rear right wheel RRW, and the rear left wheel RLW and stores the calculated values in the memory 11a as control parameters. On the basis of the calculation results, the electronic control unit 11 calculates the vehicle speed V of the vehicle 1 and stores the calculated value in the memory 11a as a control parameter. In the present embodiment, the average of the wheel speeds Vfr, Vfl, Vrr, and Vrl is calculated and taken as the vehicle speed V (= (Vfr + Vfl + Vrr + Vr1)/4).

The electronic control unit 11 serves as vehicle behavioral quantify detection device for detecting the vehicle speed V, which serves as a vehicle behavioral quantify.

Brake Control

A detection signal indicative of the stepping-on measurement of the brake pedal BP is input to the electronic control unit 11 from the brake stepping-on-force sensor BS. On the basis of the input detection signal, the electronic control unit 11 calculates a stepping-on measurement. In execution of predetermined control, such as antilock braking control, on the basis of the calculated stepping-on measurement, the electronic control unit 11 calculates a required brake fluid pressure of each of the wheel cylinders 24 to 27 and outputs control instruction values for generating the brake fluid pressures to a drive circuit section 47 of the hydraulic circuit 28 for driving the solenoid valves. Also, detection signals indicative of brake fluid pressures of the wheel cylinders 24 to 27 are input to the electronic control unit 11 from the fluid pressure sensors 29 to 32. On the basis of the detection signals, the electronic control unit 11 calculates the brake fluid pressures of the wheel cylinders 24 to 27 and stores the calculated values in the memory 11a as control parameters. The electronic control unit 11 performs feedback control by device of using detected brake fluid pressures as feedback quantities.

As shown in FIG. 1, the vehicle 1 has a yaw rate sensor 33, a longitudinal acceleration sensor 34, and a lateral acceleration sensor 35. The yaw rate sensor 33 inputs a detection signal indicative of an actual yaw rate $\gamma$, which is an actual yaw rate of the vehicle 1, to the electronic control unit 11. On the basis of the detection signal, the electronic control unit 11 calculates the actual yaw rate $\gamma$ and stores the calculated value in the memory 11a as a control parameter. The longitudinal acceleration sensor 34 inputs a detection signal indicative of an actual longitudinal acceleration Gx, which is an actual longitudinal acceleration of the vehicle 1, to the electronic control unit 11. On the basis of the detection signal, the electronic control unit 11 calculates the actual longitudinal acceleration Gx and stores the calculated value in the memory 11a as a control parameter. The lateral acceleration sensor 35 inputs a detection signal indicative of an actual lateral acceleration Gy, which is an actual lateral acceleration of the vehicle 1, to the electronic control unit 11. On the basis of the detection signal, the electronic control unit 11 calculates the actual lateral acceleration Gy and stores the calculated value in the memory 11a as a control parameter.

The yaw rate sensor 33 serves as vehicle behavioral-quantity detection device for detecting the actual yaw rate $\gamma$.

Steering Control

The electronic control unit 11 uses the above-mentioned various detection signals as various control parameters, and independently controls the steering actuators 16FR, 16FL, 16RR, and 16RL on the basis of these control parameters. Further, the electronic control unit 11 controls the unillustrated steering reaction actuator of the steering reaction imparting unit SST on the basis of the various control parameters.

Control Block Diagram

Next, control blocks of the integrated control apparatus will be described with reference to the control block diagram of FIG. 4. In FIG. 4, reference numerals 40 to 45 and a1 to a3 denote control blocks in the software system of the electronic control unit 11; and drive circuit sections 46 to 48 and subsequent blocks are those in the hardware system.

Target-Value Calculation Section 40

The target-value calculation section 40 calculates a target yaw rate $\gamma^*$, which is a target vehicle behavioral-quantity, on the basis of the vehicle speed V and the actual steering angle $\delta$. Specifically, the target-value calculation section 40 calculates the target yaw rate $\gamma^*$ and the target slip angle $\beta^*$ (target skid angle) of the vehicle 1 on the basis of equations of motion of a vehicle shown below.

$$mV\frac{d\beta}{dt} + 2(K_f + K_r)\beta + \left[mV + \frac{2}{V}(l_f K_f - l_r K_r)\right]\gamma = 2K_f\delta \qquad (1)$$

$$2(l_f K_f - l_r K_r)\beta + I\frac{d\gamma}{dt} + \frac{2(l_f^2 K_f + l_r^2 K_r)}{V}\gamma = 2l_f K_f \delta \qquad (2)$$

Eq. (1) and Eq. (2) are known equations of motion of the vehicle 1 that is modeled as a 2-wheel vehicle having a front wheel and a rear wheel as shown in FIG. 6. In Eqs. (1) and (2), m is inertial mass of the vehicle; V is vehicle speed; $\beta$ is vehicle-body skid angle (vehicle-body slip angle); Kf is front cornering power; Kr is rear cornering power; lf is distance between the front axle and the center of gravity P0 of the vehicle; lr is distance between the rear axle and the center of gravity of the vehicle; $\delta$ is actual steering angle; and I is yawing moment of inertia. In FIG. 6, $\beta$f is front-wheel skid angle (front-wheel slip angle), and $\beta$r is rear-wheel skid angle (rear-wheel slip angle). Additionally, x and y represent coordinate axes of a coordinate system fixed to the vehicle and passing through the center of gravity of the vehicle. Notably, during ordinary travel in which the vehicle does not exhibit a tendency of under-steer or a tendency of over-steer, since the front right wheel FRW and the front left wheel FLW are controlled by the electronic control unit 11 such that they are steered by the same angle, the actual steering angle $\delta$ coincides with the steered angles of the front right wheel FRW and the front left wheel FLW detected by the steered angle sensors 13a and 13b.

The target-value calculation section 40 calculates a yaw rate difference $\Delta\gamma$ between the actual yaw rate $\gamma$ and the target yaw rate $\gamma$* and uses the calculated yaw rate difference $\Delta\gamma$ as a vehicle-control target value. The target-value calculation section 40 serves as target vehicle behavioral-quantity calculation device and vehicle-control target value calculation device.

<Grip factor Calculation Section 41>

As shown in FIG. 5, the grip factor calculation section 41 includes reaction torque detection device M3, friction torque estimation device M5, self-aligning torque estimation device M6, self-aligning torque gradient-at-origin estimation device M10, reference self-aligning torque setting device M11, and grip factor estimation device M12. The grip factor calculation section 41 estimates grip factor $\varepsilon$ of each wheel by use of these means. The grip factor calculation section 41 serves as estimation device for estimating the grip factor of each wheel.

In the following description, in order to simplify the description, estimation of grip factor $\varepsilon$ of the front right wheel FRW is described, and estimation of grip factors of the remaining wheels is omitted, because when the items in relation to the front right wheel FRW in the following description are read as those for the remaining wheels, the following description can be read as description for estimation of grip factors of the remaining wheels.

First, outline of grip factor estimation will be described. As is apparent from FIGS. 2 and 3, the self-aligning torque in relation to a side force acting on the front right wheel FRW exhibits a characteristic as represented by Tsaa in FIG. 8. When Tsaa represents the actual self-aligning torque, and Fyf represents the side force serving as a wheel index, Tsaa = Fyf·(en + ec). Thus, the nonlinear characteristic of the actual self-aligning torque Tsaa in relation to the side force Fyr directly represents a change in the pneumatic trail en. Hence, the inclination K1 of the actual self-aligning torque Tsaa as measured near the origin 0 in relation to the side force Fyf (where the wheel is in grip condition) is identified; i.e., a self-aligning torque characteristic in complete grip condition (characteristic of reference self-aligning torque Tsao) is obtained. The initial value of the inclination K1 is an experimentally obtained, predetermined value. Preferably, during normal run, during which the grip factor is high, the inclination K1 that assumes the initial value is corrected as appropriate. The actual self-aligning torque Tsaa is calculated as described later.

The grip factor $\varepsilon$ of each wheel is estimated on the basis of the reference self-aligning torque Tsao and the actual self-aligning torque Tsaa. For example, when the side force is Fyf1, the reference self-aligning torque Tsao assumes a value of Tsao1 (= K1·Fyf1), and the actual self-aligning torque Tsaa assumes a value of Tsaal, the grip factor $\varepsilon$ is obtained as $\varepsilon$ = Tsaa1/Tsao1.

As described above, the grip factor of the wheel can be estimated on the basis of a change in self-aligning torque (actual self-aligning torque Tsaa) in relation to the side force Fyf.

Action of Configuration Adapted to Estimate Grip factor

In FIG. 5, torque detection device M2 is configured as steering-force index detection device for detecting a steering force index. Specifically, the torque detection device M2 is formed of the torque sensors TS1 to TS4. In the case of the front right wheel FRW, the torque sensor TS1 serves as the torque detection device M2.

On the basis of the detection result of the torque detection device M2, the reaction torque detection device M3 detects reaction torque, which is input to the self-aligning torque estimation device M6. The steering angle sensor SS, which serves as steering-angle detection device M4 of FIG. 5, detects the steering angle θ. On the basis of the detected steering angle θ, the friction torque estimation device M5 estimates friction torque Tfrc of a steering mechanism formed by the steering gear 17FR, etc., which is input to the self-aligning torque estimation device M6. On the basis of the input reaction torque and friction torque, the self-aligning torque estimation device M6 estimates the actual self-aligning torque Tsaa, which is generated on the wheels.

Specifically, when a steering operation is performed, the steering angle θ is detected by the steering angle sensor SS, and the steering actuator 16FR is controlled in accordance with the steering angle θ. That is, the electronic control unit 11 calculates a target position (target steering angle) corresponding to the steering angle θ, generates a control instruction value needed for steering, on the basis of the difference between the target position and the steered angle detected by the steered angle sensor 13a, and controls the steering actuator 16FR in accordance with the instruction value. When the vehicle does not exhibit a tendency of under-steer or a tendency of over-steer, the front left wheel FLW is controlled to have the same steered angle as that of the front right wheel FRW, and the left and right rear wheels are controlled in such a manner that their steered angles become zero. In the case where the steered angles of the left and right rear wheels have changed as a result of a certain control, the left and right rear wheels may have non-zero steered angles.

In this case, self-aligning torque generated on the front right wheel FRW balances a value (torque) obtained by subtracting the friction torque Tfrc of the steering mechanism from the torque of the steering actuator 16FR. Accordingly, the actual self-aligning torque Tsaa is obtained as Tsaa = Teps - Tfrc, where Teps is torque which is output from the steering actuator 16FR and is detected by the torque sensor TS1. Tfrc is a torque component (friction torque) caused by friction of the steering mechanism.

As mentioned above, Tfrc is a friction component of the steering mechanism; i.e., a torque component caused by friction of the steering mechanism. In the present embodiment, Tfrc is subtracted from Teps for correction, to thereby obtain the actual self-aligning torque Tsaa.

The above-mentioned correction method will be described with reference to FIG. 9. When the vehicle is running straight, the actual reaction torque (Teps) is zero. When the driver starts steering operation by turning the steering wheel SW, actual reaction torque begins to be generated. At this time, first, torque to cancel Coulomb friction of the steering mechanism is generated. Next, the front wheels (tires) begin to be turned, and thus self-aligning torque begins to be generated.

In the initial stage where steering operation is initiated in the straight running state, as represented by the segment O - A of FIG. 9, self-aligning torque is not generated in relation to an increase in actual reaction torque. Thus, an estimated value of self-aligning torque is output as the actual self-aligning torque Tsaa that increases along a slight inclination with actual reaction torque (strictly speaking, the actual self-aligning torque Tsaa is a corrected, estimated value, but the term "estimated" is omitted). When the steering wheel SW is turned further, and thus actual reaction torque falls outside the friction torque region, the actual self-aligning torque Tsaa is output along the segment A - B of FIG. 9. When the steering wheel SW is turned back, and thus actual reaction torque decreases, the actual reaction torque Tsaa is output in such a manner as to decrease with actual reaction torque along a slight inclination as represented by the segment B - C of FIG. 9. As in the case where the steering wheel SW is turned further, when actual reaction torque falls outside the friction torque region, the actual self-aligning torque Tsaa is output along the segment C - D of FIG. 9.

Next, side force estimation device M9 will be described.

The side force estimation device M9 receives detection signals from lateral acceleration detection device M7 and yaw rate detection device M8, which serve as vehicle behavioral-quantity detection device. In the present embodiment the lateral acceleration sensor 35 serves as the lateral acceleration detection device M7, and the yaw rate sensor 33 serves as the yaw rate detection device M8.

On the basis of detection signals from the lateral acceleration detection device M7 and the yaw rate detection device M8, the side force estimation device M9 estimates the side force Fyf acting on the wheel. Specifically, on the basis of the output results of the lateral acceleration detection device M7 and the yaw rate detection device M8, the side force Fyf is estimated as $Fyf = (Lr \cdot m \cdot Gy + Iz \cdot d\gamma/dt)/L$, where Lr is distance between the center of gravity and the rear axle; m is the mass of the vehicle; L is wheel base; Iz is the yawing moment of inertia; Gy is lateral acceleration; and $d\gamma/dt$ is a value obtained by differentiating the yaw rate with respect to time.

The side force estimation device M9 serves as wheel index estimation device. The self-aligning torque gradient-at-origin estimation device M10 estimates the gradient of self-aligning torque as measured near the origin. Specifically, on the basis of the actual self-aligning torque Tsaa estimated by the self-aligning torque estimation device M6 and the side force Fyf estimated by the side force estimation device M9, the self-aligning torque gradient-at-origin estimation device M10 estimates the self-aligning torque gradient-at-origin K1. which is the gradient of self-aligning torque as measured near the origin in FIG. 8.

On the basis of the self-aligning torque gradient-at-origin K1 and the side force Fyf, the reference self-aligning torque setting device M11 calculates the reference self-aligning torque Tsao as Tsao = K1·Fyf.

On the basis of the reference self-aligning torque Tsao and the actual self-aligning torque Tsaa, the grip factor estimation device M12 estimates the grip factor $\varepsilon$ as $\varepsilon$ = Tsaa/Tsao.

After the grip factor of one wheel is estimated, the grip factors of the remaining wheels are successively estimated in the same manner. Notably, in the following description, the grip factors of the front right wheel FRW, the front left wheel FLW, the rear right wheel RRW, and the rear left wheel RLW may be represented by $\varepsilon1$ to $\varepsilon4$, respectively.

Optimal-Distribution Processing Section 42

The optimal-distribution processing section 42 uses the yaw rate difference $\Delta\gamma$ calculated by the target-value calculation section 40 as a vehicle-control target value and optimally distributes the vehicle-control target value among the steering system, the drive system, and the brake system on the basis of the grip factors $\varepsilon1$ to $\varepsilon4$ of the four wheels estimated in the grip factor calculation section 41.

Distribution ratios among the steering, drive, and brake systems in optimal distribution processing are stored in the ROM in the form of map. The map is prepared beforehand by device of a test or the like such that the distribution ratios vary in accordance with the magnitude of the absolute value of the yaw rate difference $\Delta\gamma$ and whether the yaw rate difference $\Delta\gamma$ is positive or negative, and such that a wheel corresponding to the smallest one of the grip factors $\varepsilon1$ to $\varepsilon4$ is increased in grip factor. The optimal-distribution processing section 42 performs optimal distribution processing on the basis of the map. As a result of optimal distribution processing, the optimal-distribution processing section 42 generates a control target value for the drive system, a control target value for the brake system, and a control target value for the steering system in equal number to objects of control. The generated control target values are output to adders a1 to a3 as instruction values. Hereinafter, an instruction value for the drive system is called a "control instruction value At," a control value for the brake system is called a "control instruction value Bt," and an instruction value for the steering system is called a "control instruction value Ct." In the present embodiment, the number of objects of control is one for the drive system, but four (wheel cylinders 24 to 27) for the brake system, and four (steering actuators 16FR, 16FL, 16RR, and 16RL) for the steering system.

The optimal-distribution processing section 42 serves as distribution-ratio-setting device.

Drive Control Section

A drive control section 43 of the drive system shown in FIG. 4 functions as follows. A known control parameter for judging the behavioral condition of the vehicle 1 is input to the drive control section 43. On the basis of the control parameter, the drive control section 43 sets a control instruction value Aw and outputs the control instruction value Aw to the adder a1. Examples of the control parameter include the vehicle speed V, the wheel speeds Vfr, Vfl, Vrr, and Vrl, and the throttle opening of the engine EG based on the stepping-on measurement of the accelerator pedal AP. The adder a1 adds the control instruction value Aw and the control instruction value At and outputs the obtained sum (Aw + At) to the drive circuit section 46 of the drive force distribution unit 7 as a new control instruction value. On the basis of the new control instruction value (Aw + At), the drive circuit section 46 supplied the electromagnetic solenoid (not shown) of the drive power distribution unit 7 with current corresponding to the control instruction value (Aw + At), thereby adjusting the frictional engagement force between the clutch discs. As a result, the drive force distribution unit 7 distributes drive power corresponding to the control instruction value (Aw + At) to the rear wheels, thereby transmitting torque to the rear right wheel RRW and the rear left wheel RLW.

Since drive power is distributed between the front wheels and the rear wheels in accordance with a control instruction value that improves the grip factor, a wheel whose grip factor is the lowest among the wheels is improved in the grip factor, thereby ensuring running stability.

Braking Control Section

The braking control section 44 of the brake system shown in FIG. 4 functions as follows. A known control parameter for braking the vehicle 1 is input to the braking control section 44. On the basis of the control parameter, the braking control section 44 calculates the individual brake fluid pressures of the wheel cylinders 24 to 27. Control instruction values Bw for generating the corresponding brake fluid pressures are output to the corresponding adders a2. Examples of the control parameter include the vehicle speed V, the wheel speeds Vfr, Vfl, Vrr, and Vrl, and a stepping-on measurement detected by the brake stepping-on-force sensor BS.

In FIG. 4, in order to simplify the description, only a single adder a2 and a single drive circuit section 47 are representatively illustrated. In actuality, adders a2 and drive circuit sections 47 are provided in equal number with the wheel cylinders 24 to 27. As will be described later, the adders a2 output corresponding control instruction values to the corresponding drive circuit sections 47, and the drive circuit sections 47 drives the corresponding wheel cylinders 24 to 27. The below description will representatively discuss a single object of control.

The adder a2 adds the control instruction value Bw and the control instruction value Bt and outputs the obtained sum (Bw + Bt), as a new control instruction value, to the drive circuit section 47 for a solenoid valve of the hydraulic circuit 28. On the basis of the new control instruction value (Bw + Bt), the drive circuit section 47 controls the solenoid valve of the hydraulic circuit 28, thereby controlling the brake fluid pressure of the corresponding wheel cylinder 24, 25, 26, or 27. As a result, the wheel cylinder 24, 25, 26, or 27 brakes the corresponding wheel in accordance with the control instruction value (Bw + Bt).

As a result, by means of braking any appropriate wheel, a wheel whose grip factor is the lowest among the wheels is improved in grip factor, thereby ensuring running stability.

Steering Control Section

The steering control section 45 shown in FIG. 4 functions as follows. A known control parameter for judging the behavioral condition of the vehicle 1 is input to the steering control section 45. On the basis of the control parameter, the steering control section 45 sets a control instruction value Cw and outputs the control instruction value Cw to the adder a3. Examples of the control parameter include the steering angle 0, the vehicle speed V, the wheel speeds Vfr, Vfl, Vrr, and Vrl, and a detection signal (steered angle signal) indicative of the steered angle of each wheel.

Notably, in FIG. 4, in order to simplify the description, a single adder a3 and a single drive circuit section 48 are shown as representatives; however, four adders a3 and four drive circuits 48 are provided for the steering actuators 16FR, 16FL, 16RR, and 16RL. As described later, control instruction values output from the adders a3 are fed to the corresponding drive circuits 48, and the drive circuits 48 drive the corresponding steering actuators. Accordingly, in the following description, one object of control (i.e., the single adder a3 and the single drive circuit section 48) will be described as a representative.

For the front right wheel FRW and the front left wheel FLW, the steering control section 45 calculates a target position (target steering angle) for the wheels corresponding to the steering angle 6, and generates a control instruction value needed for steering, on the basis of the difference between the target position and the steered angle detected by the steered angle sensor 13a.

Further, the steering control section 45 detects whether the vehicle exhibits a tendency of under-steer or a tendency of over-steer, from the speed differential between inside and outside wheels, the steered angle of the front wheels, etc., on the basis of steered angle signals of the individual wheels, and wheel speeds of the individual wheels. When the vehicle 1 travels along a curve and exhibits a tendency of under-steer, the steering control section 45 calculates a target steering angle so that a rear wheel located on the outer side of a curved travel path of the vehicle is directed outward of the vehicle 1. For example, when the vehicle 1 makes a left turn, the steering control section 45 calculates a target steering angle so that the rear right wheel RRW is directed outward of the vehicle 1.

When the steering control section 45 detects a tendency of over-steer, the steering control section 45 calculates a target steering angle so that a rear wheel located on the outer side of a curved travel path of the vehicle is directed inward of the vehicle 1. For example, when the vehicle 1 makes a left turn, the steering control section 45 calculates a target steering angle so that the rear right wheel RRW is directed inward of the vehicle 1.

The steering control section 45 outputs to the adder a3 a control instruction value Cw corresponding to the calculated target steering angle. The adder a3 calculates the sum of the control instruction value Cw and a control instruction value Ct, and outputs the sum (Cw + Ct) to the drive circuit 48 for the steering actuator 16RR (16RL), as a new control instruction value. On the basis of the new control instruction value (Cw + Ct), the drive circuit 48 supplies to the steering actuator 16RR (16RL) current corresponding to the new control instruction value (Cw + Ct), to thereby steer the rear right wheel RRW (rear left wheel RLW).

As a result, in the case of a tendency of under-steer, an inner moment is generated in the vehicle 1, whereby the slip angle decreases, and stable travel is realized. At this time, among the wheels, the grip factor of a wheel having the smallest grip factor is increased, and thus, more stable travel is realized.

Meanwhile, in the case of a tendency of over-steer, an outer moment is generated in the vehicle 1, whereby the slip angle decreases, and stable travel is realized. At this time, among the wheels, the grip factor of a wheel having the smallest grip factor is increased, and thus, more stable travel is realized.

FIG. 7 is a control flowchart that the electronic control unit 11 of the present embodiment follows for execution of control.

In step S100, the electronic control unit 11 performs initialization. In step S200, the electronic control unit 11 receives detection signals from various sensors, and communication signals from other control units (not shown). In step S300, the target-value calculation section 40 calculates a target vehicle behavioral-quantity; i.e., the target yaw rate $\gamma^*$. In step S400, the target-value calculation section 40 calculates the yaw rate difference $\Delta\gamma$ between the actual

yaw rate $\gamma$ and the target yaw rate $\gamma^*$ as a vehicle-control target value. In step S500, the grip factor calculation section 41 estimates the grip factors $\varepsilon1$ to $\varepsilon4$. In step S600, the optimal-distribution processing section 42 performs optimal distribution processing for distribution of the vehicle-control target value among actuators and generates the control instruction values At, Bt, and Ct. In step S700, the electronic control unit 11 outputs the control instruction values for the steering, brake, and drive systems to the actuators of the systems.

The present embodiment is characterized by the following:

(1) In the present embodiment, in the vehicle having independently steerable four wheels, the electronic control unit 11 serves as the target vehicle behavioral-quantity calculation device and calculates the target yaw rate (target vehicle behavioral-quantity) in accordance with the vehicle speed V and the steering angle $\theta$. The electronic control unit 11 serves as the vehicle-control target value calculation device and calculates the yaw rate difference $\Delta\gamma$ (vehicle-control target value) on the basis of the target yaw rate $\gamma^*$ and the actual yaw rate $\gamma$. The electronic control unit 11 serves as estimation device and estimates the grip factors $\varepsilon1$ to $\varepsilon4$ of the individual wheels to the road surface. The electronic control unit 11 serves as the distribution-ratio-setting device and sets the distribution ratio for distribution of the vehicle-control target value among the actuators of the steering, brake, and drive systems in accordance with the estimated grip factors $\varepsilon1$ to $\varepsilon4$. The electronic control unit 11 serves as the control device and controls the actuators of the three systems in accordance with the respective vehicle-control target values allocated in the set distribution ratio; i.e., in accordance with the control instruction values At, Bt, and Ct (vehicle-control target values).

As result, in the embodiment, in the vehicle of a four-wheel, independent steering type, the actuators of the individual systems are driven and controlled in accordance with the tire conditions of the individual wheels; i.e., the grip factors $\varepsilon1$ to $\varepsilon4$ of the individual wheels, in such a manner that the lowest grip factor increases. Therefore, the travel stability of the vehicle can be improved as compared with the case where the grip factors of the individual wheels are not taken into consideration. In other words, since the actuators of the individual systems are controlled in an integrated manner while loads on the wheels are considered in a more optimal manner, the travel stability can be improved.

In particular, in the embodiment, the integrated control apparatus of the present invention is embodied in a four-wheel independent steering vehicle of a steer-by-wire type. Therefore, as compared with the case of an ordinary front-wheel steering vehicle, the respective grip factors of the four wheels can be accurately estimated, and the distribution of the vehicle-control target value of the steering system, the brake system, and the drive system can be controlled more optimally. Moreover, since changes in the grip factors of the wheels can be determined before the tires reach the grip limit (friction circle), robust and highly accurate estimation of the grip factors can be expected.

Moreover, as in the case of existing brake control independently performed for the individual wheels, the steering system can perform independent control for each wheel. Therefore, more fine optimal control can be performed in accordance with the vehicle behavior quantity, whereby the vehicle stability can be secured and enhanced in a wider range of situations.

(2) The drive system of the vehicle 1 of the present embodiment includes the drive force distribution unit 7 for distributing drive force to the front wheels (front right wheel FRW and front left wheel FLW) and the rear wheels (rear right wheel RRW and rear left wheel RLW); and the electronic control unit 11 controls the actuator (electromagnetic solenoid) of the drive force distribution unit 7. As a result, in an embodiment, the above-mentioned action and effects can be attained through operation of controlling the distribution of drive force to the front wheels and the rear wheels in accordance with the tire conditions of the individual wheels; i.e., the grip factors $\varepsilon1$ to $\varepsilon4$.

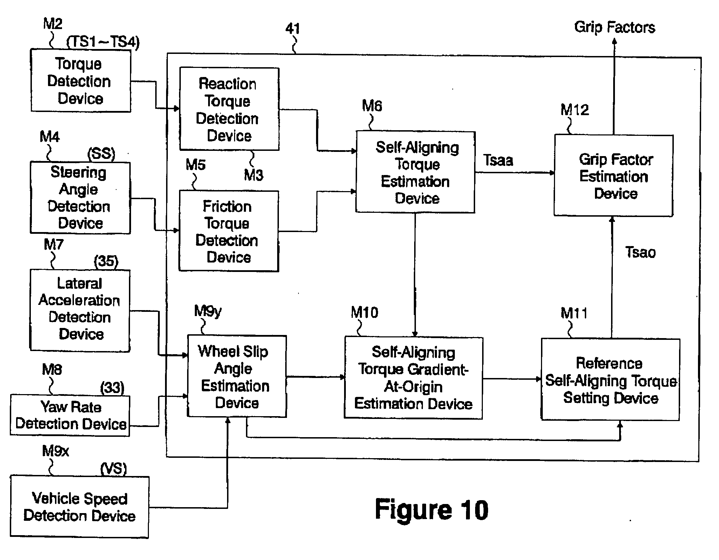

Another embodiment of the present invention will next be described with reference to FIGS. 10 to 15. Configurational features identical with those of the previous embodiment are denoted by common reference numerals, and repeated description thereof is omitted; and different features are mainly described. This embodiment differs from the previous embodiment only in the method of estimating the grip factor in the electronic control unit 11. In other words, this embodiment estimates the grip factor $\varepsilon$ while using the slip angle of the wheel as a wheel index. Notably, in this embodiment, the grip factor $\varepsilon$ includes the grip factors $\varepsilon1$ to $\varepsilon4$.

FIG. 10 is a block diagram of the grip factor calculation section 41, which estimates the grip factor from the slip angle of the wheel and self-aligning torque. The torque detection device M2, the reaction torque detection device M3, the steering-angle detection device M4, the friction torque estimation device M5, and the self-aligning torque estimation device M6 are similar to those of the previous embodiment. Reaction torque and friction torque are calculated, and self-aligning torque is estimated. The slip angle of the wheel is obtained on the basis of the steering angle $\theta$, the actual yaw rate $\gamma$, the actual lateral acceleration Gy, and the vehicle speed V. Thus, as in the case of the previous embodiment, detection signals from the steering-angle detection device M4, the lateral acceleration detection device M7, and the yaw rate detection device M8, together with a detection signal from the vehicle speed detection device M9x, are input to wheel slip estimation device M9y, which serves as wheel index estimation device. In the present embodiment, the vehicle speed sensor serves as the vehicle speed detection device M9x.

The steering-angle detection device M4, the lateral acceleration detection device M7, the yaw rate detection device M8, and the vehicle speed detection device M9x serve as the vehicle behavioral-quantity detection device for detecting the behavioral-quantity of the vehicle.

In the wheel slip estimation device M9y, first, a body slip angular-speed $d\beta/dt$ is obtained on the basis of the actual yaw rate $\gamma$, the actual lateral acceleration Gy, and the vehicle speed V. The obtained body slip angular-speed $d\beta/dt$ is integrated, thereby yielding the vehicle-body slip angle $\beta$. On the basis of the vehicle-body slip angle $\beta$, the slip angle $\alpha f$ is calculated by use of the vehicle speed V, the steering angle $\theta$, and vehicular specifications. Notably, the vehicle-body slip angle $\beta$ can be estimated by use of a vehicle model instead of the integration method. Also, the vehicle-body slip angle $\beta$ can be calculated by combined use of the integration method and the modeling method.

On the basis of the above-estimated self-aligning torque and slip angle $\alpha f$, the self-aligning torque gradient-at-origin estimation device M10 identifies the gradient of self-aligning torque near the origin. On the basis of the obtained gradient and the slip angle, the reference self-aligning torque setting device M11 sets a reference self-aligning torque. On the basis of the result of comparison between the reference self-aligning torque set by the reference self-aligning torque setting device M11 and the self-aligning torque estimated by the self-aligning torque estimation device M6, the grip factor estimation device M12 estimates the grip factor $\varepsilon$ (including $\varepsilon 1$ to $\varepsilon 4$) of the wheel.

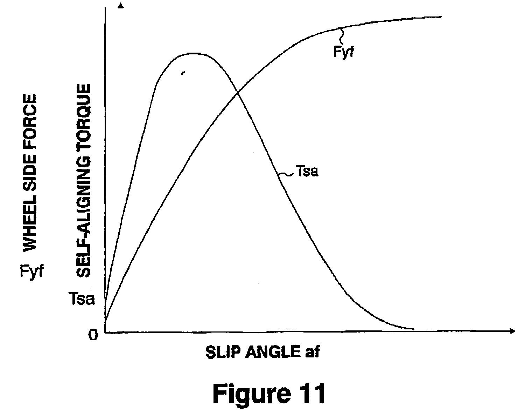

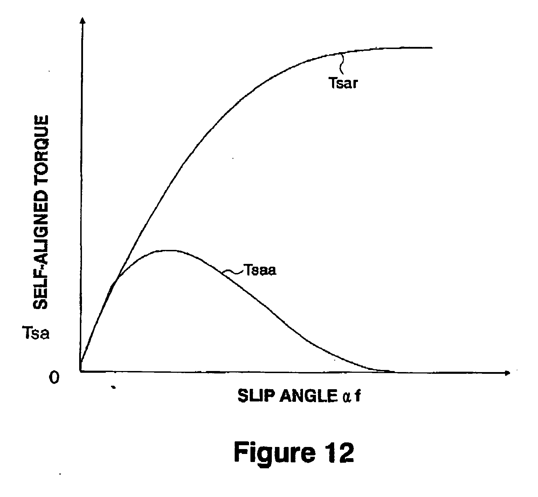

The above-mentioned estimation of the grip factor $\varepsilon$ will be described in detail with reference to FIGS. 11 to 15. As shown in FIG. 11, the relation of the side force Fyf and the self-aligning torque Tsa with the wheel slip angle (hereinafter called the "slip angle $\alpha f$") exhibits a nonlinear characteristic in relation to the slip angle $\alpha f$. Since the self-aligning torque Tsa is the product of the side force Fyf and the trail e (= en + ec), a self-aligning torque characteristic in the case of the wheel being in grip condition; i.e., the pneumatic trail en being in complete grip condition, is nonlinear as represented by Tsar in FIG. 12.

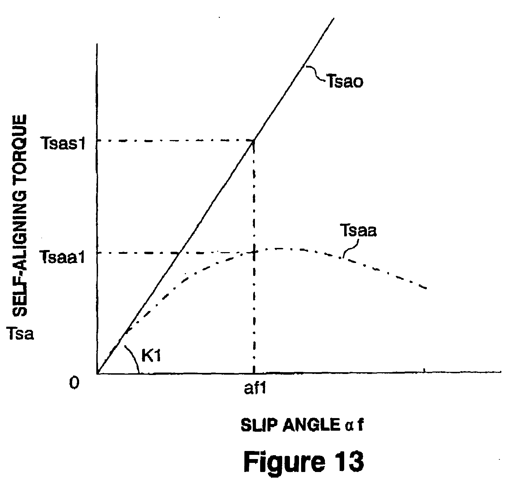

However, in the present embodiment, a self-aligning characteristic in complete grip condition is assumed to be linear. As shown in FIG. 13, a gradient K2 of the self-aligning torque Tsa in relation to the slip angle as measured in the vicinity of the origin is obtained, and a reference self-aligning torque characteristic (represented by Tsas in FIG. 13) is set. For example, when the slip angle is $\alpha f1$, the reference self-aligning torque is calculated as $Tsas1 = K2 \cdot \alpha f1$. The grip factor $\varepsilon$ is obtained as $\varepsilon = Tsaa1/Tsas1 = Tsaa1/(K2 \cdot \alpha f1)$.

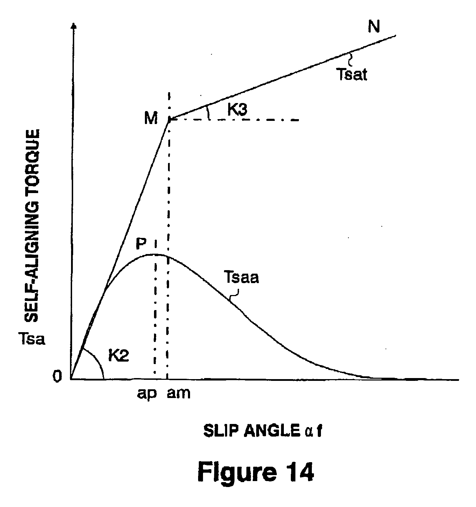

The method of FIG. 13 for setting the reference self-aligning torque assumes the reference self-aligning torque characteristic to be linear. As a result, in a region where the slip angle $\alpha \cdot f$ is large, an error associated with estimation of the grip factor becomes large, possibly resulting in impaired accuracy in estimation of the grip factor. Therefore, preferably, as shown in FIG. 14, at a predetermined slip angle or greater, the gradient of self-aligning torque is set to K3, whereby the nonlinear characteristic of the reference self-aligning torque is linearly approximated as represented by OMN in FIG. 14. In this case, preferably, the self-aligning torque gradient K3 is experimentally obtained and set beforehand, and, during running, the gradient K3 is identified and corrected. The point M is set on the basis of an inflextion point (point P) of the actual self-aligning torque. For example, the inflextion point P of the actual self-aligning torque is obtained. Then, a slip angle $\alpha p$ corresponding to the inflextion point P is obtained. A slip angle that is greater than the slip angle $\alpha p$ by a predetermined value is taken as $\alpha m$. A point on the straight line of the gradient K3 that corresponds to the slip angle $\alpha m$ is set as the point M.

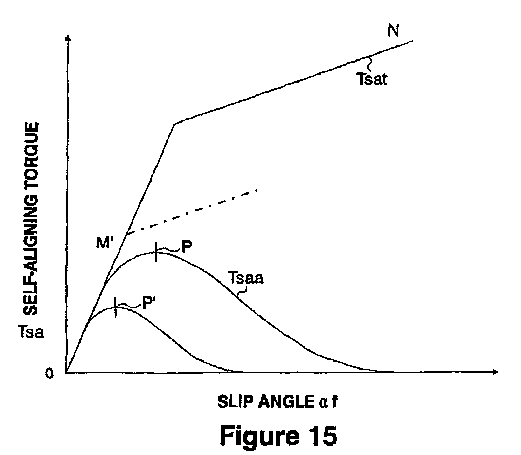

Furthermore, since the characteristic of the reference self-aligning torque in relation to the slip angle is influenced by friction coefficient $\mu$ of the road surface, as shown in FIG. 15, the reference self-aligning torque is set on the basis of the inflextion point P of the actual self-aligning torque Tsaa, whereby a highly accurate reference self-aligning torque characteristic can be set. For example, when the friction coefficient of the road surface lowers, the characteristic of the actual self-aligning torque Tsaa changes from representation by the solid line to representation by the broken line in FIG. 15. Specifically, when the friction coefficient $\mu$ of the road surface lowers, the inflextion point of the actual self-aligning torque Tsaa changes from the point P to a point P'. Therefore, the reference self-aligning torque characteristic (Tsat) must be changed from OMN to OM'N'. In this case, a point M' is set on the basis of the inflextion point P'; thus, even when the friction coefficient of the road surface changes, the reference self-aligning torque characteristic can be set while following a change of the friction coefficient of the road surface.

This embodiment can yield actions and effects similar to those of the previous embodiment described above.

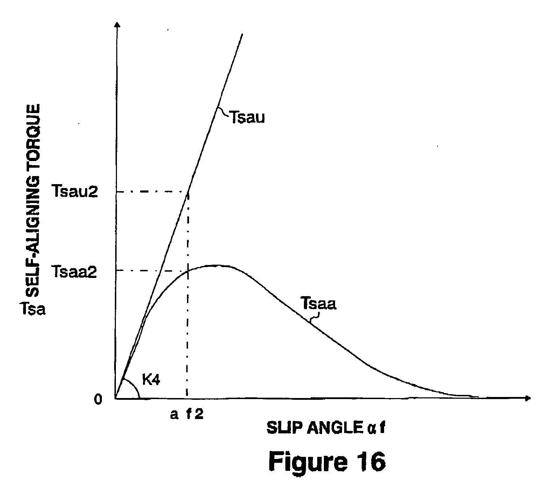

Further embodiment of the present invention will next be described with reference to FIG. 16. The further embodiment has the same hardware configuration as that of the previous embodiments and differs from the other embodiment in the method of calculating grip factors in the grip factor calculation section 41.

In previous embodiments, attention is paid to change in pneumatic trail of each wheel, the grip factor of each wheel is obtained on the basis of self-aligning torque. The grip factor calculation section 41 of the present embodiment estimates the grip factor of each wheel, which represents the grip level of the wheel in the lateral direction (the grip factor in this case is represented by $\varepsilon m$), on the basis of the allowance of side force with respect to friction of a road surface, in place of self-aligning torque.

According to a theoretical model (brush model), the relation between wheel side force Fyf and actual self-aligning torque Tsaa is represented by the following equations. That is, in the case where $\xi = 1 - \{Ks/(3 \cdot \mu \cdot Fz)\} \cdot \lambda$,

$$\text{when } \xi > 0, \text{ Fyf} = \mu \cdot Fz \cdot (1 - \xi^3); \qquad (3)$$

$$\text{when } \xi \leq 0, \text{ Fyf} = \mu \cdot Fz; \qquad (4)$$

$$\text{when } \xi > 0, \text{ Tsaa} = (1 \cdot Ks/6) \cdot \lambda \cdot \xi^3 ; \qquad (5)$$

$$\text{when } \xi \leq 0, \text{ Tsaa} = 0. \qquad (6)$$

Notably, Fz represents surface contact load; 1 represents the contact length of a contact surface; Ks represents a constant corresponding to tread stiffness; and $\lambda$ represents lateral slip ($\lambda = \tan(\alpha f)$), where $\alpha f$ is a wheel slip angle.

Since the wheel slip angle $\alpha f$ is generally small in the region of $\xi > 0$, $\lambda$ can be treated as being equal to $\alpha f$. As is apparent from Eq. (3), since the maximum side force is $\mu \cdot Fz$, a road-surface-friction utilization ratio $\eta$, which is the ratio to the maximum side force corresponding to the road surface friction coefficient $\mu$, can be represented by $\eta = 1 - \xi^3$. Accordingly, $\varepsilon m$ (= 1 - $\eta$) represents a road-surface-friction allowance level. When $\varepsilon m$ is considered a grip factor of a wheel, $\varepsilon m = \xi^3$. Accordingly, the above-described Eq. (5) can be represented as follows.

$$\text{Tsaa} = (1 \cdot Ks/6) \cdot \alpha f \cdot \varepsilon m \qquad (7)$$

Eq. (7) represents that the actual self-aligning torque Tsaa is in proportional to the wheel slip angle $\alpha f$ and the grip factor $\varepsilon m$. Thus, reference self-aligning torque, which is actual self-aligning torque Tsaa at the time when the grip factor $\varepsilon m = 1$ (the road-surface-friction utilization ratio is zero; i.e., the road-surface-friction allowance level is 1), is represented as follows.

$$\text{Tsau} = (1 \cdot Ks/6) \cdot \alpha f \qquad (8)$$

Accordingly, from Eqs. (7) and (8), the grip factor $\varepsilon m$ can be obtained as follows.

$$\varepsilon m = \text{Tsaa/Tsau} \qquad (9)$$

As is apparent from the fact that Eq. (9) does not include the road surface friction coefficient $\mu$ as a control parameter, the grip factor $\varepsilon m$ can be calculated without use of the road surface friction coefficient $\mu$. In this case, the gradient K4 (= 1 $\cdot$ Ks/6) of the reference self-aligning torque Tsau can be set by use of the above-mentioned brush model. Alternatively, the gradient can be obtained empirically. Moreover, detection accuracy can be improved through an operation of first setting an initial value; identifying, during travel, the gradient of self-aligning torque in the vicinity of the zero wheel slip angle; and correcting the gradient.

For example, in FIG. 16, when the wheel slip angle is $\alpha f2$, the reference self-aligning torque is calculated as Tsau2 = K4 $\cdot \alpha f2$. Then, the grip factor $\varepsilon m$ is obtained as $\varepsilon m$ = Tsaa2/Tsau2 = Tsaa2/(K4 $\cdot \alpha f2$).

Thus, instead of the grip factor $\varepsilon$ determined on the basis of the pneumatic trail of an embodiment, the grip factor $\varepsilon m$ determined on the basis of the road-surface-friction allowance level can be used.

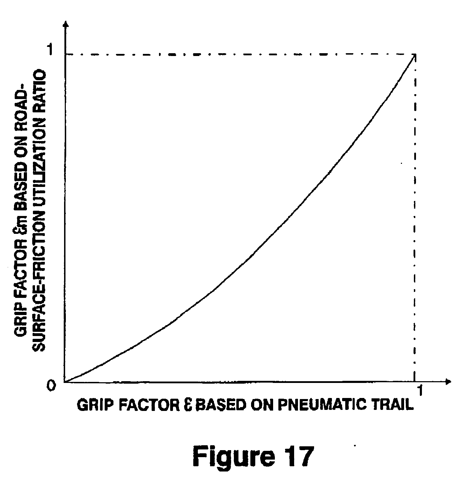

Notably, the grip factor $\varepsilon$ in the embodiments and the grip factor $\varepsilon m$ in the embodiments have the relation shown in FIG. 17. Accordingly, the electronic control unit 11 may be configured in such a manner that a map representing this relation is previously stored in ROM or the like, and the electronic control unit 11 obtains a grip factor $\varepsilon$ and then convert it to a corresponding grip factor $\varepsilon m$. Alternatively, the electronic control unit 11 may be configured to obtain a grip factor $\varepsilon m$ and then convert it to a corresponding grip factor $\varepsilon$.

Notably, the embodiments of the present invention may be modified as follows.

- In the above-described embodiment, the integrated control apparatus of the present invention is embodied in a four-wheel independent steering vehicle of a steer-by-wire type. However, the integrated control apparatus may be embodied in a four-wheel independent steering vehicle of a non-steer-by-wire type.

- In the above-described embodiment, the electronic control unit 11 serves as target vehicle behavioral-quantity calculation device so as to calculate a target yaw rate, and serves as vehicle-control target value calculation device so as to calculate a vehicle-control target value on the basis of the target yaw rate and the actual yaw rate $\gamma$, which is a vehicle behavioral-quantity. However, the present invention is not limited thereto. For example, the electronic control unit 11 may include, as target vehicle behavioral-quantity calculation device, device for calculating a target tire lateral force, which is a target vehicle behavioral-quantity, and device for calculating a target vehicle yaw moment, which is a target vehicle behavioral-quantity. Further, the electronic control unit 11 may serve as vehicle-control target value calculation device so as to calculate a vehicle-control target value on the basis of the difference between the target tire lateral force and a tire lateral force, which is a vehicle behavioral-quantity, as well as the target vehicle moment, and the actual vehicle yaw moment, which is a vehicle behavioral-quantity.

- In the above-described embodiment, the actuator of the drive system is the actuator of the drive force distribution unit 7. However, the actuator of the drive system is not limited thereto, and may be an actuator for changing the throttle opening of the engine EG.

- In the above-described embodiment, three systems are controlled in an integrated manner. However, it may be the case that two systems are controlled in an integrated manner; e.g., the drive system and the brake system, the drive system and the steering system, and the steering system and the brake system.

Obviously, numerous modifications and variations of the present invention are possible in light of the above teachings. It is therefore to be understood that within the scope of the appended claims, the present invention may be practiced otherwise than as specifically described herein.

In a vehicle of a four-wheel independent steering type, an electronic control unit calculates a target yaw rate in accordance with a vehicle speed and a steering angle, and calculates a vehicle-control target value on the basis of the target yaw rate and an actual yaw rate. The electronic, control unit estimates the grip factors of the individual wheels to road surface, and sets a distribution ratio for distribution of the vehicle-control target value among actuators of a steering system, a brake system, and a drive system in accordance with the estimated grip factors. The electronic control unit controls the actuators of the three systems in accordance with control instruction values determined on the basis of the vehicle-control target value and the distribution ratio.

**Claims**

1. An integrated control apparatus for a vehicle **characterized by** comprising:

   a vehicle behavioral-quantity detection device (M7, M8, M9x) detecting a vehicle behavioral-quantity;
   an operation quantity detection device (M4) detecting a quantity of driver's operation to a brake system, a drive system, and a steering system capable of independently steering individual wheels (FRW, FLW, RRW, RLW) of the vehicle;
   a target vehicle behavioral-quantity calculation device (11) calculating a target vehicle behavioral-quantity in accordance with the detected vehicle behavioral-quantity and the detected operation quantity;
   a vehicle-control target value calculation device (11) calculating a vehicle-control target value on the basis of the target vehicle behavioral-quantity and the vehicle behavioral-quantity;
   an estimation device (11) for estimating grip factors of the individual wheels (FRW, FLW, RRW, RLW) to road surface;
   a distribution ratio setting device (11) setting, in accordance with the grip factors of the individual wheels (FRW, FLW, RRW, RLW), a distribution ratio for distribution of the vehicle-control target value among respective actuators of at least two systems among the brake system, the drive system, and the steering system; and
   a control device (11) controlling the actuators of the at least two systems in accordance with the vehicle-control target value distributed among the actuators at the distribution ratio.

2. An integrated control apparatus for a vehicle according to claim 1, **characterized in that** the target vehicle behavioral-quantity calculation device (11) calculates a target yaw rate, which serves as the target vehicle behavioral-quantity: and the vehicle-control target value calculation device (11) calculates the vehicle-control target value on the basis of the target yaw rate and an actual yaw rate, which serves as the vehicle behavioral-quantity.

3. An integrated control apparatus for a vehicle according to claim 1 or 2, **characterized in that** the drive system includes a drive force distribution device (7) distributing drive force between front wheels and rear wheels (FRW, FLW); and the control device (11) controls an actuator of the drive force distribution device (7).

4. An integrated control apparatus for a vehicle according to any one of claims 1 to 3, **characterized in that** the estimation device (11) estimates each of the grip factors on the basis of change in pneumatic trail of the corresponding wheel (FRW, FLW, RRW, RLW).

5. An integrated control apparatus for a vehicle according to any one of claims 1 to 3, **characterized in that** the estimation device (11) estimates each of the grip factors on the basis of a road surface friction allowance level of the corresponding wheel (FRW, FLW, RRW, RLW).

6. An integrated control apparatus for a vehicle according to any one of claims 1 to 3, **characterized in that** the estimation device (11) comprises:

    a steering-force-index detection device (M2) detecting a steering force index including torque applied to the steering system including steering mechanisms (16FR, 16FL, 16RR, 16RL, 17FR, 17FL, 17RR, 17RL) for the individual wheels (FRW, FLW, RRW, RLW);
    a self-aligning torque estimation device (M6) estimating a self-aligning torque produced by each wheel (FRW, FLW, RRW, RLW) on the basis of the detected steering force index;
    a wheel index estimation device (M9, M9y) estimating, on the basis of the vehicle behavioral-quantity detected by the vehicle behavioral-quantity detection device (M7, M8, M9x), at least one wheel index among wheel indexes including side force and slip angle of each wheel (FRW, FLW, RRW, RLW); and
    a grip factor estimating device (M12) estimating the grip factor of each wheel (FRW, FLW, RRW, RLW) on the basis of change in the self-aligning torque estimated by the self-aligning torque estimation device (M6) in relation to the wheel index estimated by the wheel index estimation device (M9, M9y).

7. An integrated control apparatus for a vehicle according to claim 6, **characterized by** further comprising a reference self-aligning torque setting device (M11) for setting a reference self-aligning torque on the basis of the wheel index estimated by the wheel index estimation device (M9, M9y) and the self-aligning torque estimated by the self-aligning torque estimation device (M6), wherein the grip factor estimating device (M12) estimates the grip factor of each wheel (FRW, FLW, RRW, RLW) on the basis of results of comparison between the reference self-aligning torque set by the reference self-aligning torque setting device (M11) and the self-aligning torque estimated by the self-aligning torque estimation device (M6).

8. An integrated control apparatus for a vehicle according to claim 7, **characterized in that** the reference self-aligning torque setting device (M11) sets a reference self-aligning torque characteristic which is approximated from the characteristic of the self-aligning torque estimated by the self-aligning torque estimation device (M6) in relation to the wheel index estimated by the wheel index estimation device (M9, M9y), the reference self-aligning torque characteristic being defined as a straight line in a coordinate system and passing through the origin of the coordinate system, and sets the reference self-aligning torque on the basis of the reference self-aligning torque characteristic.

**Figure 1**

EP 1 521 146 A2

**Figure 2**

**Figure 3**

# Figure 4

<u>Software System</u>

11

<u>Hardware System</u>

EP 1 521 146 A2

**Figure 5**

# Figure 6

| | |
|---|---|
| γ | : Actual Yaw Rate |
| V | : Vehicle Speed |
| β | : Vehicle-Body Skid Angle |
| Kf | : Front Cornering Power |
| Kr | : Rear Cornering Power |
| If | : Distance between Front Axle and Center of Gravity of Vehicle |
| Ir | : Distance between Rear Axle and Center of Gravity of Vehicle |
| δ | : Actual Steering Angle |
| βf | : Front-Wheel Skid Angle |
| βr | : Rear-Wheel Skid Angle |

```
      ╭───────────╮
      │  Actual   │
      │ Yaw Rate  │
      ╰───────────╯
            │
            ▼
   ┌──────────────────┐
   │  Initialization  │──S100
   └──────────────────┘
            │
            ▼
   ┌──────────────────┐
   │ Input of Sensor  │──S200
   │ and Communication│
   │     Signals      │
   └──────────────────┘
            │
            ▼
   ┌──────────────────┐
   │ Calculate Target │──S300
   │     Vehicle      │
   │Behavioral-Quantity│
   └──────────────────┘
            │
            ▼
   ┌──────────────────┐
   │ Calculate Vehicle-│──S400
   │  Control Target  │
   │ Value (Difference)│
   └──────────────────┘
            │
            ▼
   ┌──────────────────┐
   │  Estimate Grip   │──S500
   │     Factors      │
   └──────────────────┘
            │
            ▼
   ┌──────────────────┐
   │Optimal Distribution│──S600
   │  among Actuators │
   └──────────────────┘
            │
            ▼
   ┌──────────────────┐
   │  Output Control  │──S700
   │ Instruction Values to│
   │ Actuators of Steering,│
   │Brake, and Drive Systems│
   └──────────────────┘
```

# Figure 7

Figure 8

**Figure 9**

Figure 10

Figure 11

**Figure 12**

28

**Figure 13**

Figure 14

Figure 15

Figure 16

**Figure 17**